# FASCICULE DE BREVET EUROPEEN

(11) **EP 2 293 710 B1**
(45) Date de publication et mention de la délivrance du brevet: **25.07.2012**
(21) Numéro de dépôt: 09741976.6
(22) Date de dépôt: 22.04.2009
(51) Int. Cl.: A47J 43/046

(54) **MOUSSEUR POUR PRÉPARER DE LA MOUSSE À PARTIR D'UNE BOISSON COMPRENANT DU LAIT**
AUFSCHÄUMMASCHINE ZUR SCHAUMHERSTELLUNG AUS EINEM MILCHHALTIGEN GETRÄNK
FROTHING MACHINE FOR CREATING FROTH FROM A DRINK CONTAINING MILK

(30) Priorité: 07.05.2008 FR 0853047
(43) Date de publication de la demande: 16.03.2011
(73) Titulaire: Compagnie Méditerranéenne des Cafés, 06510 Carros (FR)
(72) Inventeur: BLANC, Jean-Pierre, 06000 Nice (FR); GOERING, Alain, 06000 Nice (FR)
(74) Mandataire: Hautier, Nicolas
(86) Numéro de dépôt international: PCT/EP2009/054772
(87) Numéro de publication internationale: WO 2009/135758

(56) Documents cités:
- EP-A- 1 656 866
- WO-A-2004/043213
- GB-A- 622 115
- US-A1- 2007 165 485

## Description

L'invention concerne un mousseur pour préparer de la mousse à partir d'une boisson comprenant du lait.

L'invention trouvera notamment son application pour la préparation de mousse de lait servant à la réalisation de boissons comprenant du café et de la mousse de lait telles que des cappuccino, café latte, macchiato etc.

Habituellement, les mousseurs comprennent un récipient destiné à contenir la boisson à base de lait et dans lequel est logé un agitateur. L'agitateur est conformé pour être entraîné en rotation afin de fouetter la boisson à base de lait jusqu'à l'obtention de mousse.

Certains dispositifs prévoient un entraînement en rotation de l'agitateur par un arbre traversant la paroi du récipient afin de transmettre le mouvement de rotation depuis des moyens d'entraînement jusqu'à l'agitateur. Ce type de dispositif implique d'importantes contraintes d'étanchéité au niveau du récipient.

D'autres dispositifs prévoient un accouplement magnétique entre des moyens d'entraînement et l'agitateur. A cet effet, les moyens d'entraînement comprennent un moteur électrique dont l'arbre de sortie est muni d'aimants permanent. Ces aimants permanents sont disposés de sorte à définir un entrefer à l'intérieur duquel les lignes de flux sont perpendiculaires à la direction de rotation autour de laquelle tourne l'agitateur. L'agitateur comprend des aimants permanents. Ces derniers sont également disposés de sorte que leurs pôles définissent une direction également perpendiculaire à la direction de rotation.

D'autres dispositifs, tel que le document EP1656866, prévoient un accouplement magnétique entre des moyens d'entraînement et l'agitateur. A cet effet, les moyens d'entraînement comprennent un moteur électrique dont l'arbre de sortie est muni d'aimants permanent. Ces aimants permanents sont disposés de sorte à définir un entrefer à l'intérieur duquel les lignes de flux sont perpendiculaires à la direction de rotation autour de laquelle tourne l'agitateur. L'agitateur comprend des aimants permanents. Ces derniers sont également disposés de sorte que leurs pôles définissent une direction également perpendiculaire à la direction de rotation.

L'arbre du moteur est agencé pour venir se loger dans un alésage de l'agitateur de manière à ce que les aimants de ce dernier soient disposés en périphérie des aimants des moyens d'entraînement. L'ensemble des aimants est disposé dans un même plan qui est perpendiculaire à la direction de rotation.

Une amélioration du couple transmis à l'agitateur permettrait d'augmenter la quantité de mousse préparée et/ou de réduire le temps nécessaire à l'obtention de mousse. La présente invention vise à s'affranchir des contraintes d'étanchéité au niveau du récipient et à augmenter le couple disponible au niveau de l'agitateur tout en conservant un encombrement limité.

A cet effet on prévoit selon l'invention un mousseur pour préparer de la mousse à partir d'une boisson selon le revendication 1.

Ainsi, la disposition des aimants permet d'augmenter la distance entre la direction de rotation et l'entrefer formé par un aimant moteur et un aimant suiveur. Le couple disponible au niveau de l'agitateur est ainsi augmenté.

Par conséquent, une plus grande quantité de mousse peut être obtenue et ceci dans un temps plus court sans pour autant induire d'importantes contraintes d'étanchéité au niveau du récipient.

Le mousseur selon l'invention pourra en outre présenter de manière facultative au moins l'une quelconque des caractéristiques suivantes:
- le mousseur est agencé de manière à ce que chaque aimant moteur et suiveur soit orienté de sorte que ses pôles définissent une direction sensiblement parallèle à la direction de rotation.
- le dispositif comprend une pluralité d'aimants moteur et une pluralité d'aimants suiveur et la pluralité d'aimants moteur et respectivement la pluralité d'aimants suiveur sont orientés de manière identique.
- les moyens d'entraînement et l'agitateur sont disposés de part et d'autre d'une paroi du récipient.
- l'agitateur et les moyens d'entraînement comprennent respectivement au moins deux aimants suiveurs et deux aimants moteurs diamétralement opposés et idéalement trois aimants suiveur et trois aimants moteur répartis à 120°. Le mousseur est conformé de manière à ce que chaque aimant suiveur puisse être disposé au regard d'un aimant moteur.
- les moyens d'entraînement comprennent un disque comportant l'aimant moteur et un moteur électrique comportant un arbre de sortie couplé en rotation avec le disque.
- le dispositif comprend un boîtier dans lequel sont logés les moyens d'entraînement.
- dans une variante de réalisation, les moyens d'entraînement sont alimentés en électricité par une source d'alimentation électrique connectée au boîtier.
- dans une autre variante de réalisation, le mousseur comprend un socle de connexion amovible par rapport au boîtier destiné à être connecté à une source d'alimentation électrique et conformé pour coopérer avec le boîtier de sorte qu'une coopération mécanique du socle avec le boîtier assure une connexion électrique des moyens d'entraînement.

Cette variante permet une grande liberté de mouvement lors de l'utilisation, en particulier lorsqu'il s'agit de verser la mousse obtenue. Ainsi le bloc formé par le récipient et le boîtier peut être manipulé aisément et indépendamment de toute source d'alimentation électrique.
- le récipient est solidaire du boîtier.
- le récipient est formé d'une même pièce obtenue par emboutissage ou moulage.
- le dispositif comprend des moyens de chauffage destinés à chauffer la boisson.
- le récipient présente un fond pour contenir la boisson et le mousseur est agencé de sorte que l'aimant suiveur et l'aimant moteur sont situés de part et d'autre du fond.
- les moyens d'entraînement et l'agitateur sont conformés de sorte que l'agitateur est entraîné en rotation par les moyens d'entraînement par effet magnétique sans l'intrusion d'un organe mécanique à travers la paroi du récipient.
- les moyens de chauffage sont disposés sur l'extérieur du récipient.
- les moyens de chauffage sont logés dans le boîtier.
- le dispositif comprend un axe destiné à guider l'agitateur en rotation, l'axe comprenant une extrémité libre par laquelle l'agitateur est destiné à être monté sur l'axe.
- le mousseur comprend des moyens de retenue agencés pour empêcher un retrait involontaire de l'agitateur par rapport à l'axe et permettre une retenue amovible de l'agitateur sur l'axe.
- les moyens de retenue permettent un maintien de l'agitateur sur l'axe par clipsage.

Selon un mode de réalisation, le mousseur comprend un support d'axe apte à être rapporté sur le récipient ou sur le boîtier de sorte à positionner et à maintenir l'agitateur dans une position de fonctionnement. De préférence, l'axe est fixé de manière amovible sur le support d'axe.

Selon une variante de ce mode de réalisation, le support d'axe est adapté pour être rapporté au niveau d'une ouverture du récipient ou du boîtier. De préférence le support d'axe forme alors un couvercle pour le récipient.

Selon une autre variante de ce mode de réalisation, le support d'axe et le récipient sont mutuellement conformés pour permettre une solidarisation du support d'axe dans le fond du récipient ou sur les parois intérieures du récipient.

Avantageusement, le récipient et le support d'axe comprennent des éléments coopérant mutuellement pour stopper la rotation du support autour de la direction de rotation.

Selon un autre mode de réalisation, l'axe est fixé de manière non amovible sur le récipient. L'axe est rapporté sur une paroi intérieure du récipient par soudage ou collage où constitue un relief formé avec le récipient.
- l'agitateur comporte un alésage à l'intérieur duquel est destiné à pénétrer l'extrémité de l'axe. L'alésage présente une surface de contact. L'extrémité de l'axe et la surface de contact sont conformées pour établir un contact ponctuel entre l'axe et l'agitateur. Selon une première variante de ce mode de réalisation, l'extrémité de l'axe a une forme sensiblement sphérique et la surface de contact a une forme plane ou une forme concave de rayon de courbure supérieure à celui de la sphère. Selon une seconde variante de ce mode de réalisation, l'extrémité libre est sensiblement plane et la surface de contact présente une forme sensiblement obtuse.

On peut également prévoir que l'extrémité libre de l'axe et la surface de contact sont conformées pour établir un contact linéaire entre l'axe et la surface de contact. La surface de contact est une réduction de diamètre et l'extrémité de l'axe est une sphère.
- le mousseur comprend des moyens formant une butée agencée pour stopper le déplacement de l'agitateur le long de l'axe selon le sens d'insertion,
- les moyens formant une butée comprennent deux reliefs complémentaires situés respectivement sur l'axe et sur l'agitateur, l'un des reliefs étant un bossage et l'autre étant une gorge.

D'autres caractéristiques, buts et avantages de la présente invention apparaîtront à la lecture de la description qui va suivre et au regard des dessins annexés donnés à titre d'exemples non limitatifs et sur lesquels :
- la figure 1 est une vue en perspective et en coupe partielle d'un mousseur selon un premier mode de réalisation,
- la figure 2 est une vue en perspective et en coupe partielle d'une partie du mousseur selon la figure 1,
- la figure 3 est une autre vue en perspective et en coupe partielle d'une partie du mousseur selon la figure 1
- la figure 4 est une vue en perspective et en coupe partielle d'un mousseur selon un deuxième mode de réalisation,
- la figure 5 est une vue en perspective et en coupe partielle d'une partie du mousseur selon la figure 3,
- la figure 6 est un schéma simplifié d'un mousseur selon un troisième mode de réalisation,
- la figure 7 est un schéma simplifié d'un mousseur selon un quatrième mode de réalisation,
- la figure 8 est un schéma simplifié d'un mousseur selon un cinquième mode de réalisation,
- la figure 9 est un schéma simplifié d'un mousseur selon un sixième mode de réalisation,
- la figure 10 est une vue en perspective d'une portion d'agitateur.

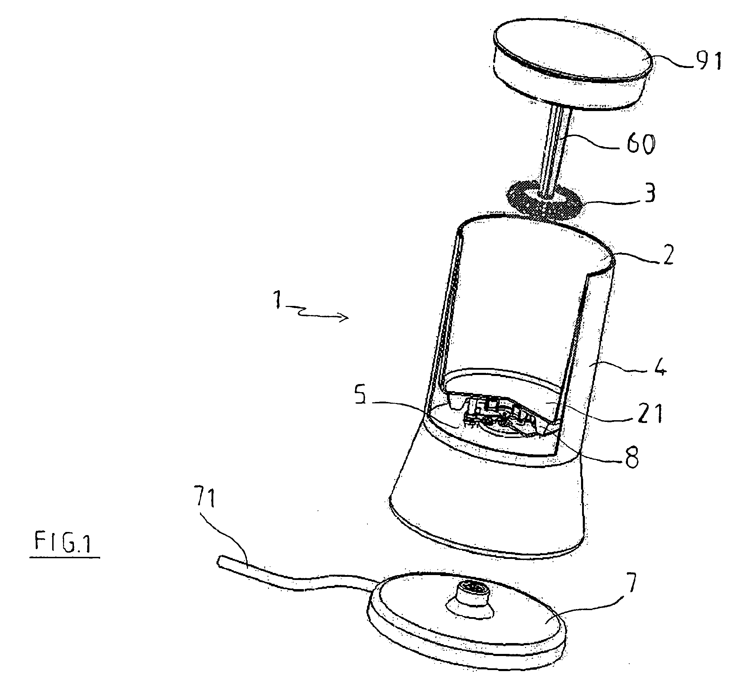

En référence aux figures 1 à 10, on a illustré plusieurs modes de réalisation de mousseurs selon l'invention.

Les caractéristiques communes à l'ensemble de ces modes de réalisation vont maintenant être décrites.

Le mousseur 1, 100 comprend un récipient 2 destiné à recevoir la boisson à base de lait et un agitateur 3 adapté pour tourner à l'intérieur du récipient 2 afin de battre et de fouetter la boisson en vue d'obtenir la mousse. L'agitateur 3 tourne autour d'une direction de rotation. Il est monté sur un axe 60, 160. Cet axe s'étend selon la direction de rotation. Le mousseur 1, 100 comprend des moyens d'entraînement 5 ayant pour fonction d'entraîner magnétiquement l'agitateur 3 en rotation. A cet effet, les moyens d'entraînement 5 comprennent un moteur 53 présentant un arbre 54 de sortie couplé en rotation avec un disque 52 muni d'aimants permanents désignés par la suite aimants moteur 51.

L'agitateur 3 comprend au moins un aimant permanent désigné par la suite aimant suiveur 31. Avantageusement, l'agitateur 3 comprend plusieurs aimants suiveurs 31.

Les moyens d'entraînement 5 sont situés à l'extérieur du récipient 2. Le mousseur 1, 100 est agencé de sorte que les aimants moteur 51 et suiveurs 31 sont disposés en regard. Le récipient présente un fond pour contenir la boisson et le mousseur est agencé de sorte que l'aimant suiveur et l'aimant moteur sont situés de part et d'autre du fond. Ainsi, une paroi du récipient 2 est disposée à l'intérieur de l'entrefer défini par un couple d'aimants formé par un aimant moteur 51 et par un aimant suiveur 31.

Les moyens d'entraînement et l'agitateur sont conformés de sorte que l'agitateur est entraîné en rotation par les moyens d'entraînement par effet magnétique sans l'intrusion d'un organe mécanique à travers la paroi du récipient. Cette structure permet de s'affranchir de contraintes d'étanchéité par rapport aux solutions dans lesquelles un organe mécanique traverse la paroi du récipient. En outre le nettoyage du récipient est grandement facilité.

De cette manière, aucun arbre d'entraînement ne traverse le récipient 2, ce qui supprime par conséquent de nombreuses contraintes d'étanchéité.

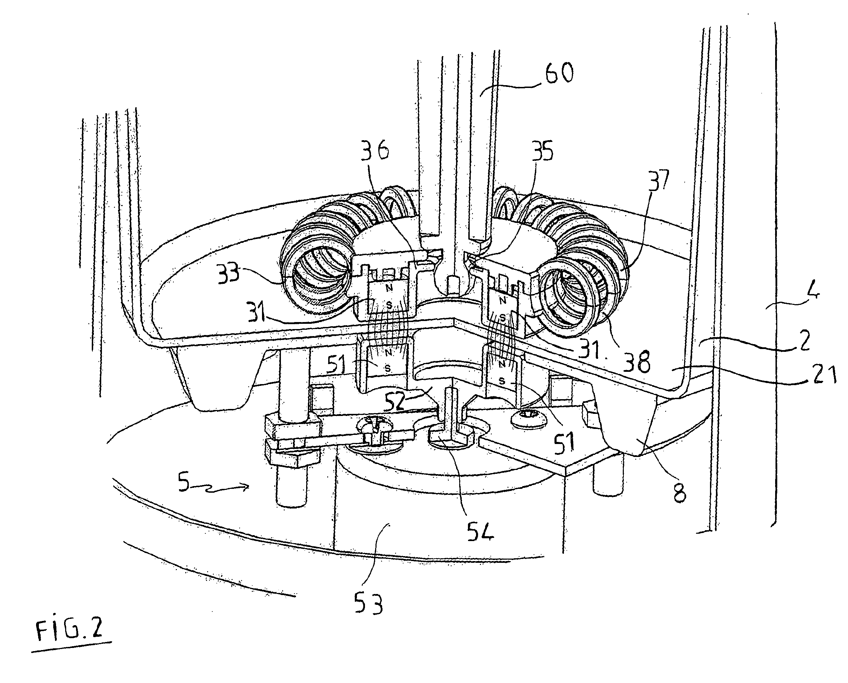

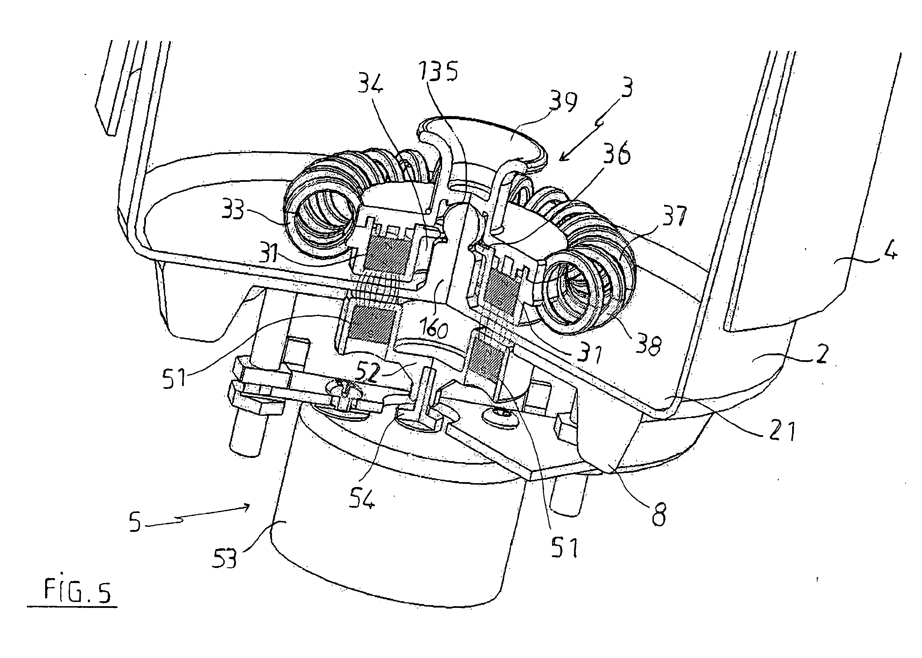

Les aimants moteurs 51 et suiveurs 31 sont disposés de sorte à ce que chaque couple d'aimants établit un couplage magnétique et forme un entrefer à l'intérieur duquel les lignes de flux sont orientées de manière sensiblement parallèle à la direction de rotation. Cette orientation des lignes de flux est représentée sur les figures 2 et 5.

Ainsi, l'entrefer défini par un couple d'aimants moteurs 51 et suiveurs 31 peut être disposé à distance de l'axe 60, 160 de rotation. Par conséquent, pour un même couple magnétique au niveau de l'entrefer, le mouvement transmis à l'agitateur 3 est augmenté. Pour une même dimension d'aimants, une plus grande quantité de lait peut ainsi être fouettée et battue. Le temps nécessaire à la préparation de mousse peut également être diminué. Avantageusement, tous les aimants moteurs 51 sont orientés de manière identique et tous les aimants suiveur 31 sont orientés de manière identique.

Des exemples d'orientation des pôles des aimants moteur 51 et suiveur 31 sont illustrés en figures 2 et 5.

Avantageusement, l'invention permet un auto positionnement de l'agitateur relativement aux moyens d'entraînement. Cet auto positionnement assure un centrage de l'agitateur autour de la direction de rotation. Les risques de mauvais positionnement ou de déplacement de l'agitateur sont donc réduits. La vitesse d'entraînement peut donc être relativement élevée sans pour autant augmenter significativement le risque de décrochage de l'agitateur 3.

Le mousseur 1, 100 comprend un boîtier 4 à l'intérieur duquel sont logés les moyens d'entraînement 5. Avantageusement, le boîtier 4 et le récipient 2 son solidaires. Le récipient 2 peut être logé dans le boîtier 4 ou être juxtaposé à ce dernier.

De préférence, le mousseur 1, 100 comprend des moyens de chauffage 8 destinés à élever la température de la boisson à base de lait et à maintenir la mousse à une température donnée. Les moyens de chauffage 8 sont disposés de préférence dans le boîtier 4.

Les moyens de chauffage permettent un échauffement contrôlé de la boisson à base de lait pendant l'opération de fouettage, ce qui accélère l'apparition de la mousse de lait et en augmente la densité.

Le mousseur 1, 100 comprend des moyens d'alimentation électrique.

Avantageusement, ces moyens d'alimentation électrique comprennent un socle d'alimentation 7 connectable à une source d'alimentation tel que le secteur. Les moyens d'alimentation électrique sont conformés de sorte qu'une coopération mécanique entre le socle 7 et le boîtier 4 permet une connexion électrique des moyens d'entraînement 5 et des éventuels moyens de chauffage 8.

Le bloc formé par le récipient 2 et le boîtier 4 constitue ainsi un ensemble sans fil lorsqu'il est désenclenché du socle 7.

Pour préparer de la mousse, le bloc est disposé sur le socle 7 puis pour verser la mousse il est retiré du socle 7. Le bloc peut ainsi être manipulé librement ce qui facilité l'utilisation du mousseur 1, 100.

Dans une variante de réalisation le bloc est également déconnectable de tout câble d'alimentation électrique. Le mousseur 1, 100 ne comporte pas de socle 7 mais présente alors une fiche destinée à coopérer avec un câble d'alimentation électrique. Cette fiche peut être disposée au niveau du boîtier 4 notamment.

Dans une autre variante de réalisation, le mousseur 1, 100 est monobloc et le boîtier 4 est connecté de manière inamovible à un câble d'alimentation électrique.

Dans d'autres variantes de réalisation les moyens d'entraînement 5 et éventuellement les moyens de chauffage sont alimentés par induction ou par des accumulateurs.

De manière avantageuse, l'agitateur 3 et le disque 52 d'entraînement comportent chacun trois aimants permanents répartis à 120°. On peut également prévoir que l'agitateur comprenne deux aimants 51.

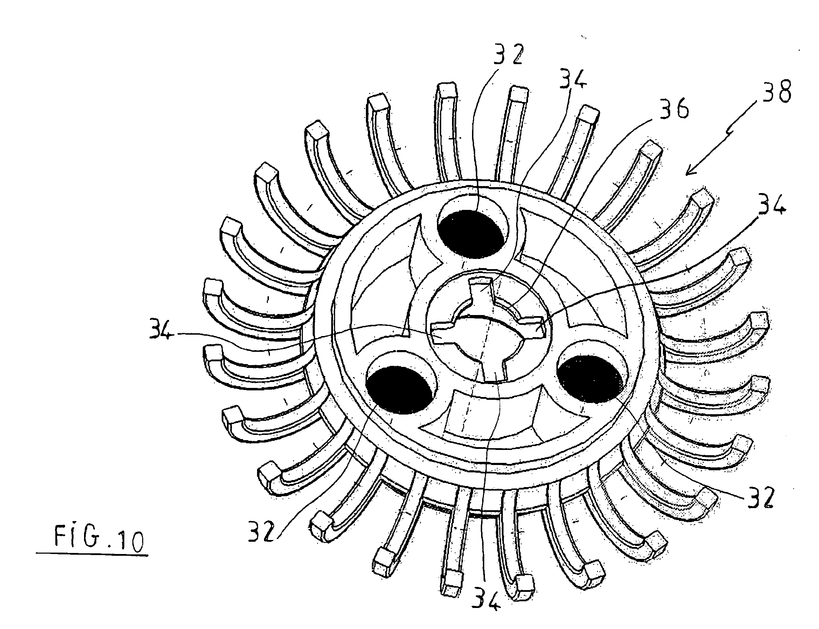

L'agitateur 3 est formé de deux demi-coques dont l'assemblage définit des logements 32 pour les aimants suiveur 31. Une demi-coque inférieure est illustrée en figure 10. Chaque demi-coque présente des demi-reliefs 33 qui, une fois l'agitateur 3 assemblé, définissent des reliefs 33 en forme d'anneaux répartis sur un cercle centré sur la direction de rotation ou en forme de spirale torique centrée sur la direction de rotation. Les reliefs 33 améliorent l'effet de fouettage de la boisson à base de lait et favorisent ainsi l'obtention de mousse.

L'agitateur 3 présente des évidements le traversant de part en part afin de limiter son poids et son coût matière. Il comporte également un alésage destiné à permettre son insertion sur l'axe 60, 160.

De manière avantageuse, chaque demi-coque est réalisée en plastique ou en téflon ou en plastique recouvert de téflon. Avantageusement, chaque demi-coque est obtenue par moulage.

Chaque demi-coque est agencée de sorte à pouvoir être assemblée avec l'autre demi-coque par simple clipsage.

Le mousseur 1, 100 comporte des moyens de retenue conformés de sorte à assurer la retenue de l'agitateur 3 sur l'axe 60, 160 lorsqu'il est entraîné en rotation. Ils sont également agencés de sorte à maintenir la retenue de l'agitateur 3 sur l'axe 60, 160 durant toute la préparation de la mousse et lorsque le mousseur 1, 100 est incliné ou est renversé pour en extraire la mousse. Ainsi, l'agitateur 3 ne tombe pas lorsque le récipient 2 est incliné.

De préférence, les moyens de retenue sont également conformés pour permettre une insertion amovible de l'agitateur 3 sur l'axe 60, 160.

Les moyens de retenue sont mécaniques.

Avantageusement, ils sont conformés pour assurer une insertion et un retrait de l'agitateur 3 sur l'axe 60, 160 par simple clipsage et déclipsage. Ainsi, le nettoyage du récipient 2 et de l'agitateur 3 est facilité.

Les différents modes de réalisation de mousseur 1, 100 selon l'invention vont maintenant être présentés.

Les mousseurs illustrés sur les figures 1, 2, 3, 6, 7, 8 et 9 comportent un axe 60 fixé de manière amovible par rapport au boîtier 4 ou au récipient 2. A cet effet, chaque axe 60 est porté par un support d'axe 9 destiné à faciliter la solidarisation amovible de l'axe 60 sur le boîtier 4 ou sur le récipient 2.

Selon le mode de réalisation présenté en figures 1, 2 et 3, le support 9 d'axe est destiné à être rapporté au niveau d'une ouverture que présente le boîtier 4 ou le récipient 2.

Ce support 9 d'axe présente une portion inférieure 92 destinée à être insérée à l'intérieur du récipient 2 et une portion supérieure 93 dont une surface est destinée à entrer en butée avec le rebord supérieur du récipient 2. Les dimensions respectives du support 9 d'axe et du récipient 2 ainsi que l'élasticité de ces deux éléments sont choisies de sorte à ce qu'un emmanchement à force du support d'axe 9 sur le récipient 2 ou sur le boîtier 4 garantit leur solidarisation mutuelle en fonctionnement. De manière préférée, on prévoit que le support d'axe 9 se déforme de manière élastique ou que le support d'axe 9 comporte un matériau, en élastomère par exemple, qui assure cette fonction de déformation.

De manière avantageuse, le support 9 d'axe fait office de couvercle 91 de mousseur 1.

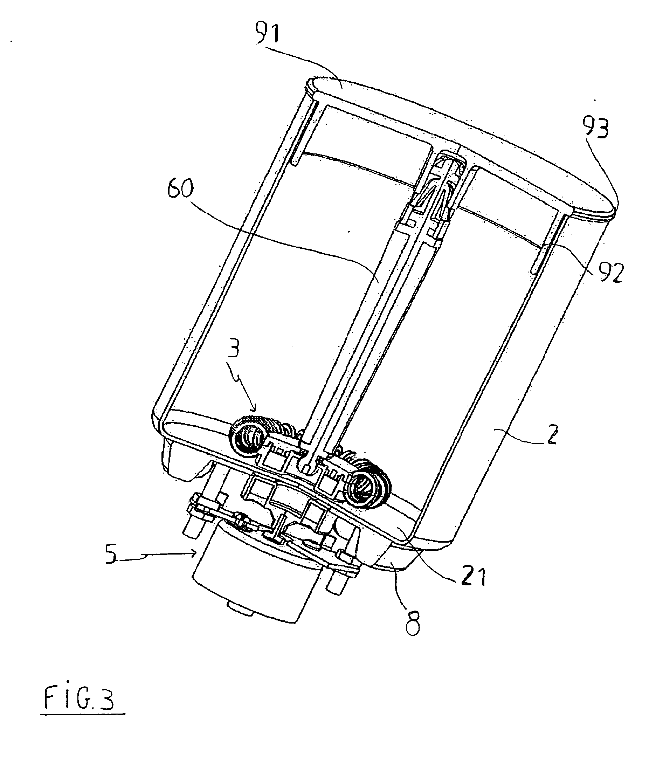

A cet effet on prévoit que le couvercle 91 présente un évidemment de centrage destiné à recevoir l'axe 60. L'axe 60 et le couvercle 91 peuvent être solidarisés par collage, thermo soudage ou clipsage par exemple. Avantageusement, ils sont mutuellement solidarisés par un clipsage amovible. De cette manière l'axe peut être facilement désolidarisé du couvercle ce qui facilite le nettoyage et le stockage de l'axe 60 et du couvercle 91. Par ailleurs, un même couvercle peut recevoir plusieurs axes 60 présentant des longueurs différentes et/ou des extrémités adaptées à recevoir des agitateurs 3 variés. Un tel support d'axe est illustré en figure 3.

Ainsi, en fonction de la quantité ou de la nature de la boisson à fouetter ou de la consistance de la mousse souhaitée, différents axes 60 chacun adaptés à des agitateurs 3 spécifiques peuvent être montés sur le couvercle 60.

Lorsque le support 9 d'axe est rapporté sur le récipient 2, l'axe 60 s'étend depuis le support 9 d'axe vers les moyens d'entraînement 5 selon une direction parallèle à la direction de rotation.

L'axe 60 est agencé pour recevoir par son extrémité libre l'agitateur 3. Les hauteurs respectives du récipient 2 et de l'axe 60 sont adaptées pour qu'en fonctionnement l'agitateur 3 soit disposé suffisamment prés des moyens d'entraînement 5 pour permettre un accouplement magnétique satisfaisant.

Comme les axes sont interchangeables sur un même couvercle, un même couvercle peut ainsi être utilisé avec des récipients de hauteurs différentes, seules la longueur de l'axe destiné à coopérer avec le couvercle devant être adaptée au récipient. Cette caractéristique présente de nombreux avantages notamment en terme de gestion et de coût de production des couvercles.

Les moyens de retenue comportent une forme sensiblement sphérique définissant l'extrémité de l'axe 60. Ils comprennent également une collerette 36 formée dans l'alésage de l'agitateur 3. Cette collerette 36 peut être obtenue par une réduction de diamètre ou par une lèvre de diamètre inférieur à celui de la sphère 61. Sous l'effet d'un emmanchement opéré par l'utilisateur, la déformation relative de la collerette 36 et/ou de la sphère 61 provoque le passage de la collerette 36 au-delà de la sphère 61. En fonctionnement, l'agitateur 3 demeure ainsi maintenu par la sphère 61 formant butée pour la collerette 36. Une fois la mousse préparée et versée, le retrait de l'agitateur 3 s'effectue et en appliquant un effort de traction sur l'agitateur 3 vers l'extrémité libre de l'axe 60. Sous l'effet de cet effort, la déformation relative de la collerette 36 par la sphère 61 provoque le passage de la collerette 36 au-delà de la sphère 61 ce qui libère l'agitateur 3.

De manière préférée, la collerette 36 présente une ou plusieurs échancrures 34 s'étendant radialement depuis l'intérieur vers l'extérieur de l'alésage. Les échancrures 34 sont dimensionnées et positionnées de sorte à favoriser une déformation élastique de la collerette 36 lorsque l'utilisateur insère l'agitateur 3 sur l'axe 60 ou le retire hors de l'axe 60. Ces échancrures 34 permettent ainsi un clipsage aisé de l'agitateur 3. L'agitateur 3 dont une portion est représentée en figure 5 comporte quatre échancrures 34.

La sphère 61 forme ainsi une butée pour la collerette 36 stoppant la translation de l'agitateur 3 vers l'extérieur de l'axe 60. L'axe 60 comporte également une autre butée pour la collerette 36 agencée pour stopper la translation de l'agitateur 3 vers la base de l'axe 60. La base de l'axe 60 est définie par son extrémité par laquelle il est lié au support 9 d'axe. Cette autre butée est formée par une augmentation de la section de l'axe 60 opposée à l'extrémité libre.

Sous l'effet de la gravité, la collerette 36 prend appui et frotte sur la sphère 61. En fonctionnement, la surface de contact 35 entre l'agitateur 3 et l'axe 60 définit par conséquent une ligne sensiblement circulaire.

Dans une variante de ce mode de réalisation, les moyens de retenue comprennent un axe 60 présentant une gorge dans laquelle la collerette 36 est destinée à s'insérer. Les parois de la gorge forment alors chacune une butée en translation pour l'agitateur 3.

Dans une autre variante de ce mode de réalisation, la sphère 61 décrite précédemment est remplacée par un bourrelet et l'alésage de l'agitateur 3 comporte outre la collerette 36 une deuxième réduction de section. Ainsi la collerette 36 est destinée à entrer au contact du bourrelet dans un premier sens pour empêcher le retrait de l'agitateur 3 hors de l'axe 60 et la deuxième réduction de section est destinée à entrer au contact de la collerette 36 dans un deuxième sens pour stopper l'insertion de l'agitateur 3 sur l'axe 60.

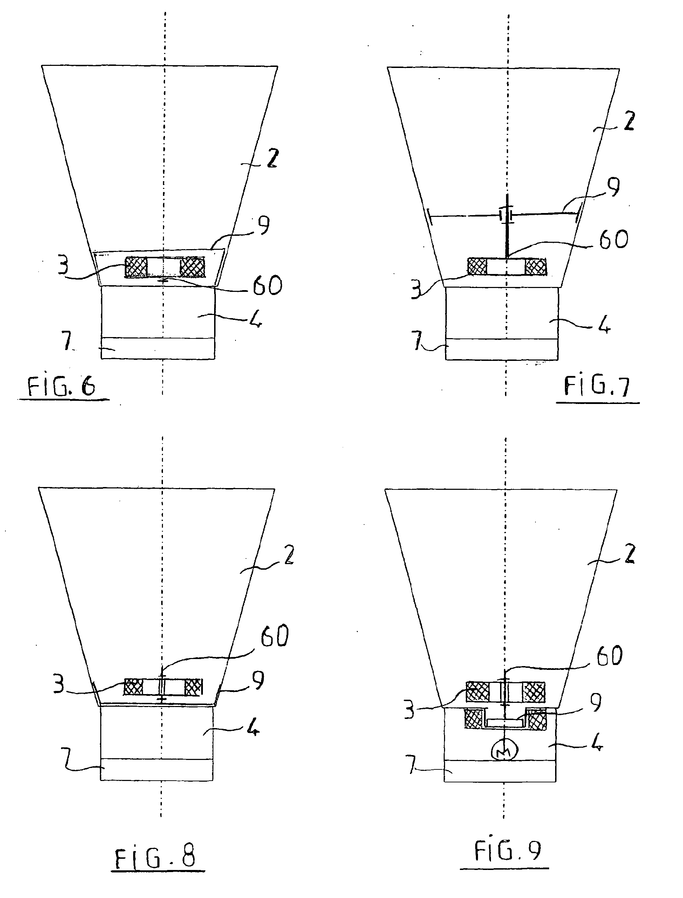

Dans les modes de réalisation dont les exemples sont illustrés en figures 6, 7, 8 et 9, le support 9 d'axe est agencé pour être rapporté à l'intérieur du récipient 2. Dans chacun de ces modes de réalisation, le support 9 d'axe coopère avec le récipient 2 pour permettre une solidarisation mécanique stable et amovible du support 9 d'axe sur les parois du récipient 2. Avantageusement, dans chacun de ces modes de réalisation, la liaison entre le support 9 et l'axe 60 est similaire à celle illustrée en figure 3 et décrite précédemment à propos du mode de réalisation dans lequel le support d'axe 9 forme un couvercle 91.

Dans le mode de réalisation illustré en figure 6, le support 9 d'axe comporte une couronne ou des pattes prenant appui sur le fond 21 du récipient ou sur les parois latérales du récipient 2 à proximité du fond ou encore à la fois sur le fond 21 et sur les parois latérales du récipient 2. L'agitateur 3 est alors disposé entre la base de l'axe 60 et les moyens d'entraînement.

Dans le mode de réalisation illustré en figure 7, le support 9 d'axe présente une zone d'appui périphérique destinée à prendre appui sur les parois latérales du récipient 2. L'agitateur 3 est également disposé entre la base de l'axe 60 et les moyens d'entraînement.

Dans le mode de réalisation illustré en figure 8, le support 9 d'axe prend appui sur le fond du récipient 2 ou sur les parois latérales du récipient 2 à proximité du fond 21. La base de l'axe 60 est disposée entre l'agitateur 3 et les moyens d'entraînement 5.

Tous les modes de réalisation décrits jusqu'à présent permettent de disposer d'un récipient 2 dont le fond est sensiblement plat. Cet aspect présente un avantage considérable en termes de nettoyabilité. En effet, dans les dispositifs connus, l'axe 60 est solidaire du fond 21, ce n'est donc pas plat. Or, il s'avère peu aisé de nettoyer efficacement les angles formés par la jonction entre les reliefs 33 formant les guidages en rotation pour l'agitateur 3.

Par ailleurs, le fond plat permet d'obtenir le récipient 2 d'une manière particulièrement aisée et notamment à partir d'une même pièce par emboutissage.

Dans le mode de réalisation illustré en figure 9, le fond 21 du récipient n'est pas plat et présente un creux à l'intérieur duquel le support 9 d'axe est destiné à être inséré. Le support 9 d'axe peut prendre appui sur le fond du creux ou sur les parois latérales du creux ou encore à la fois sur le fond et les parois latérales du creux. La base de l'axe 60 est alors disposée entre l'agitateur 3 et les moyens d'entraînement 5.

Ce mode de réalisation présente comme avantages de réduire l'encombrement de l'agitateur 3 et de faciliter son centrage par rapport aux moyens d'entraînement 5.

Les modes de réalisation illustrés sur les figures 1, 2, 3, 6, 7 et 9 permettent d'avoir une distance d'entrefer minimale. En effet, les aimants suiveur 31 peuvent être disposés de manière à effleurer le fond 21 du récipient. Le couple magnétique en est amélioré et le moment transmis à l'agitateur 3 est augmenté.

Dans les modes de réalisation illustrés sur les figures 1, 2, 3 et 6, on peut prévoir que les moyens de retenue soient tels que l'extrémité libre de l'axe 60 ne forme pas saillie sur l'agitateur 3 entre ce dernier et le fond 21 du récipient.

Ainsi comme le montre la figure 2, l'extrémité de l'axe 60 reste confinée à l'intérieur de l'alésage de l'agitateur 3. Cet agencement permet de réduire l'encombrement pour rapprocher les aimants suiveur 31 du fond 21 du récipient afin de diminuer la distance entre ces aimants et les aimants moteur 51.

Comme illustré sur les modes de réalisation 1, 2, 3, 6, 8 et 9, l'axe 60 est solidaire du support 9 d'axe et du récipient 2. L'agitateur 3 est quant à lui est monté en rotation libre sur l'axe 60.

Dans chacun de ces modes de réalisation, on pourra prévoir en variante de modifier l'axe 60 pour le rendre libre en rotation par rapport au support 9 d'axe. De préférence, l'agitateur 3 pourra alors être solidaire de l'axe 60. Ce type de liaison entre le support 9 d'axe, l'axe 60 et l'agitateur 3 est illustré en figure 7.

Dans chacun des modes de réalisation présentés en figures 1, 2, 3, 6, 7, 8 et 9, la solidarisation du support 9 d'axe sur le récipient 2 est obtenue par emmanchement à force de ces deux éléments l'un dans l'autre comme décrit à propos de l'exemple non limitatif illustré sur les figures 1, 2 et 3.

Avantageusement, pour chacun des modes de réalisation comportant un support 9 d'axe, le mousseur 1 comprend des moyens pour assurer la mise en position et le maintien en position de l'axe 60 dans sa position adéquate de fonctionnement. Ces moyens comprennent notamment des butées en rotation autour de la direction de rotation.

On pourra prévoir de manière additionnelle ou alternative des moyens de clipsage pour faciliter la retenue du support 9 d'axe sur le récipient 2. Ces moyens de clipsage peuvent comprendre une gorge et un relief destinés à coopérer mutuellement et disposés respectivement sur le récipient 2 ou sur le support 9 d'axe.

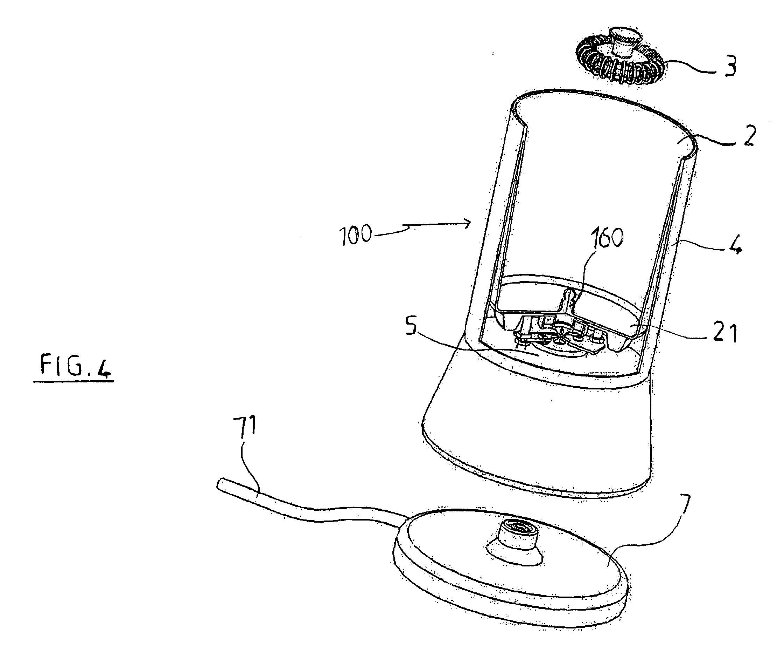

Le mousseur 100 illustré selon le mode de réalisation illustré en figures 4 et 5 comporte un axe 160 disposé de manière inamovible à l'intérieur du récipient 2. Avantageusement l'axe 160 est situé sur le fond du récipient 2. Il peut être également situé sur une paroi latérale du récipient 2.

L'axe 160 peut être formé avec le récipient 2 par moulage ou par emboutissage. Il peut être également rapporté sur le récipient 2 par soudage, brasage ou collage.

Selon un exemple illustratif de ce mode de réalisation, les moyens de retenue de l'agitateur 3 sur l'axe 160 comprennent une sphère 61 en extrémité d'axe et une collerette 36 au niveau de l'alésage de l'agitateur 3.

Comme pour les moyens de retenue décrits précédemment, l'insertion de l'agitateur 3 sur l'axe 160 s'effectue par emmanchement en appliquant un effort sur l'agitateur 3 afin de déformer la collerette 36 et/ou la sphère 61.

L'alésage présente une surface de contact 35 destinée à servir de surface d'appui et de frottement entre l'axe 160 et l'agitateur 3 lors du fonctionnement.

Dans l'exemple illustré en figures 4 et 5, l'extrémité de l'axe 160 est logée à l'intérieur de l'alésage et la surface d'appui présente une forme concave de rayon de courbure supérieur à celui de la sphère 61. Par conséquent, le contact entre l'axe 160 et la sphère 61 est ponctuel. Cet agencement permet ainsi de limiter les frottements lors du fonctionnement.

En variante d'autres formes peuvent être envisagées. Ainsi, on peut prévoir que l'alésage comporte une forme plane et que l'axe 160 comporte une forme plane, obtuse ou conique. Par ailleurs, l'axe 160 peut comporter une forme plane ou convexe et le fond de l'alésage peut comporter une forme sphérique ou conique.

L'axe 160 comporte également une gorge qui peut être formée par la jonction entre la sphère 61 et une augmentation de section de l'axe 160. La gorge est conformée pour coopérer avec la collerette 36, afin d'assurer un guidage en rotation de l'agitateur 3. La coopération entre la gorge et l'agitateur 3 permet également d'éviter que ce dernier ne se retire de l'axe 160 involontairement lors de la préparation de la mousse ou lors du versement de cette dernière. A cet effet, comme expliqué précédemment, les moyens de retenue assurent une retenue efficace, simple et amovible par clipsage par exemple.

On peut aussi prévoir que la collerette 36 et la gorge fassent office de butée en translation le long de l'axe 160 dans les deux sens et définissent la surface de contact 35 lors du fonctionnement.

Les moyens de retenue décrits pour ce mode de réalisation sont également particulièrement bien adaptés aux autres modes de réalisation de l'invention dans lesquels la base de l'axe 60, 160 est disposée entre l'agitateur 3 et les moyens d'entraînement 5. Pour rappel, les figures 8 et 9 illustrent de tels modes de réalisation.

L'agitateur 3 comporte sur sa partie supérieure 37 une zone de préhension 39 destinée à faciliter sa préhension par l'utilisateur.

Avantageusement, le mousseur 1, 100 selon l'invention permet ainsi d'augmenter le couple transmis à l'agitateur 3 sans augmenter les contraintes d'étanchéité au niveau du récipient 2.

Par ailleurs, il présente un encombrement limité. Il s'avère en outre particulièrement pratique d'utilisation tant lors de son assemblage en vue de préparer de la mousse, que lors de la préparation de la mousse ou que lors du versement de cette dernière ou encore que lors de son nettoyage.

Selon une autre solution de réalisation, tout ou partie des aimants suiveurs 31 sont substitués par des éléments ferromagnétiques. Cette autre solution de réalisation est moins avantageuse en terme de couple disponible au niveau de l'agitateur 3. Elle ne permet par non plus un auto centrage de l'agitateur 3 par rapport aux moyens d'entraînement 5. Cette autre solution avec éléments ferromagnétiques s'applique à tous les modes de réalisation décrits précédemment.

On a ainsi un agitateur 3 qui comprend au moins une pièce ferromagnétique définissant avec l'aimant moteur 51 un couplage magnétique et un entrefer à l'intérieur duquel les lignes de flux sont sensiblement colinéaires à la direction de rotation, la pièce ferromagnétique et l'aimant moteur 51 étant situés de part et d'autre de la paroi du récipient.

### REFERENCES

- 1, 100: Mousseur
- 2.: Récipient
- 21.: Fond du récipient
- 3.: Agitateur
- 31.: Aimant suiveur
- 32.: Logement
- 33.: Relief
- 34.: Echancrure
- 35: Surface de friction
- 36.: Collerette
- 37.: Partie supérieure
- 38.: Partie inférieure
- 39.: Zone de préhension
- 4.: Boîtier
- 5.: Moyens d'entraînement
- 51.: Aimant moteur
- 52.: Disque
- 53.: Moteur
- 54.: Arbre de sortie du moteur
- 60, 160: Axe
- 61: Sphère
- 7.: Socle de connexion
- 8.: Moyens de chauffage
- 9.: Support d'axe
- 91.: Couvercle
- 92.: Portion inférieure
- 93.: Portion supérieure

## Revendications

1. Mousseur (1, 100) pour préparer de la mousse à partir d'une boisson comprenant du lait comportant :
- un récipient (2) présentant un fond (21) pour contenir la boisson,
- un agitateur (3) destiné à tourner dans le récipient autour d'une direction de rotation,
- des moyens d'entraînement (5) comprenant au moins un aimant moteur (51) et agencés pour entraîner magnétiquement l'agitateur (3) autour de la direction de rotation,
- un boîtier (4) dans lequel sont logés les moyens d'entraînement (5),
- un axe (60) destiné à guider ou porter l'agitateur (3) en rotation, l'agitateur (3) comprenant au moins un aimant permanent suiveur (31) ou au moins une pièce ferromagnétique définissant avec l'aimant moteur (51) un couplage magnétique et un entrefer à l'intérieur duquel les lignes de flux sont sensiblement colinéaires à la direction de rotation, l'aimant suiveur ou la pièce ferromagnétique et l'aimant moteur étant situés de part et d'autre du fond (21) du récipient (2),
**caractérisé en ce que** l'axe (60) est fixé mécaniquement de manière amovible par rapport au récipient (2) et **en ce que** le mousseur comprend un support d'axe (9) apte à être rapporté sur le récipient (2) ou sur le boîtier (4) de sorte à positionner et à maintenir l'agitateur (3) dans une position de fonctionnement, le support d'axe (9) et le récipient (2) étant mutuellement conformés pour permettre une solidarisation du support d'axe (9) au niveau d'une ouverture du récipient (2) ou du boîtier (4) ou pour permettre une solidarisation du support d'axe (9) sur des parois latérales intérieures du récipient (2).

2. Mousseur (1, 100) selon la revendication précédente agencé de manière à ce que chaque aimant moteur (51) et suiveur (31) est disposé de sorte que ses pôles définissent une direction sensiblement parallèle à la direction de rotation.

3. Mousseur (1, 100) selon l'une quelconque des revendications précédentes, comprenant un socle (7) de connexion amovible par rapport au boîtier (4), destiné à être connecté à une source d'alimentation électrique et conformé pour coopérer avec le boîtier (4) de sorte qu'une coopération mécanique du socle (7) avec le boîtier (4) assure une connexion électrique des moyens d'entraînement (5).

4. Mousseur (1, 100) selon la revendication 3, dans lequel le récipient (2) est solidaire du boîtier (4).

5. Mousseur (1, 100) selon l'une quelconque des revendications précédentes, comprenant des moyens de retenue agencés pour empêcher un retrait involontaire de l'agitateur (3) par rapport à l'axe (60, 160) et permettre une retenue amovible de l'agitateur (3) sur l'axe (60, 160).

6. Mousseur (1) selon l'une quelconque des revendications précédentes, précédentes, dans lequel l'axe (60) est fixé de manière amovible sur le support d'axe (9).

7. Mousseur (1) selon l'une quelconque dès revendications précédentes, dans lequel le récipient (2) et le support d'axe (9) comprennent des éléments coopérant mutuellement pour stopper la rotation du support autour de la direction de rotation.

8. Mousseur (1, 100) selon l'une quelconque des revendications précédentes dans lequel l'agitateur (3) comporte un alésage à l'intérieur duquel est destinée à pénétrer une extrémité libre de l'axe (60, 160), l'alésage présentant une surface de contact (35), l'extrémité de l'axe (60, 160) et la surface de contact 35 étant conformées pour établir un contact ponctuel ou linéaire entre l'axe (60, 160) et l'agitateur (3).

## Claims

1. Frothing machine (1, 100) for preparing foam from a drink containing milk comprising:
- a receptacle (2) with a bottom (21) for receiving the drink,
- a stirrer (3) rotating inside the receptacle in one direction of rotation,
- driving means (5) including at least a driving magnet (51) fitted to drive the stirrer (3) magnetically in the direction of rotation,
- a housing (4) in which are housed the driving means (5),
- a shaft (60) for guiding or carrying the stirrer (3) in rotation, the stirrer (3) comprising at least one permanent magnet follower (31) or at least one ferromagnetic part defining with the driving magnet (51) a magnetic coupling and a gap within which the flux lines are substantially co-linear with the direction of rotation, the follower magnet or ferromagnetic part and the driving magnet being located on either side of bottom (21) of the receptacle (2),
**characterized in that** the shaft (60) is fixed so as to be mechanically fitted in a removable manner relative to the receptacle (2) and **in that** the frothing machine includes a support shaft (9) capable of being attached to the receptacle (2) or on the housing (4) so as to position and maintain the stirrer (3) in an operating position, the shaft support (9) and the receptacle (2) being mutually shaped to allow joining of the shaft support (9) at the opening of receptacle (2) or housing (4) or joining of shaft support (9) on the inner side walls of receptacle (2).

2. Frothing machine (1, 100) according to the preceding claim arranged so that each driving magnet (51) and follower (31) is arranged so that its poles define a direction substantially parallel to the direction of rotation.

3. Frothing machine (1, 100) according to any one of the preceding claims, comprising a base (7) with removable connection relative to the housing (4), designed to be connected to an electrical power source and shaped to co-act with the housing (4) so that the base (7) mechanically co-acts with housing (4) to ensure electrical connection of driving means (5).

4. Frothing machine (1, 100) according to claim 3, in which the receptacle (2) is joined to the housing (4).

5. Frothing machine (1, 100) according to any one of the preceding claims, comprising retaining means arranged to prevent unintentional withdrawal of the stirrer (3) relative to axis (60, 160) and allow removable retention of the stirrer (3) on the shaft (60, 160).

6. Frothing machine (1) according to any one of the preceding claims wherein the shaft (60) is removably secured on the shaft support (9).

7. Frothing machine (1) according to any one of the preceding claims, wherein the receptacle (2) and the shaft support (9) include co-acting components arranged to stop the rotation of the support around the direction of rotation.

8. Frothing machine (1, 100) according to any one of the preceding claims wherein the stirrer (3) comprises a bore within which is designed to penetrate a free end of the shaft (60, 160), the bore having a contact surface (35), the end of the shaft (60, 160) and the contact surface (35) being shaped to establish a point or linear contact between the shaft (60, 160) and the stirrer (3).

## Patentansprüche

1. Schäumer (1, 100) zum Herstellen von Schaum aus einem milchhaltigen Getränk, bestehend aus:
- einem Behälter (2) mit einem Boden (21) zum Aufnehmen des Getränks,
- einem Rührer (3), der sich in dem Behälter in einer Drehrichtung drehen soll,
- einem Antriebsmittel (5) mit mindestens einem Antriebsmagneten (51), die derart gestaltet sind, dass sie den Rührer (3) magnetisch in Drehrichtung antreiben können,
- einem Gehäuse (4), in dem die Antriebsmittel (5) eingebaut sind,
- einer Achse (60), die dazu bestimmt ist, den Rührer (3) bei der Drehung zu führen oder zu tragen,
wobei der Rührer (3) mindestens einen nachgeführten Dauermagneten (31) oder mindestens ein ferromagnetisches Bauteil aufweist, die mit dem Antriebsmagneten (51) magnetisch gekoppelt sind, sowie einen Luftspalt, in dem die Flusslinien annähernd kollinear zur Drehrichtung sind, wobei der Antriebsmagnet oder das ferromagnetische Bauteil und der Antriebsmagnet jeweils auf der einen und anderen Seite des Bodens (21) des Behälters (2) angeordnet sind,
**gekennzeichnet dadurch, dass** die Achse (60) bezogen auf den Behälter (2) mechanisch abnehmbar befestigt ist, und dass der Schäumer eine Achsenhalterung (9) aufweist, die derart am Behälter (2) oder am Gehäuse (4) angesetzt werden kann, dass der Rührer (3) in einer Betriebsstellung positioniert und gehalten werden kann, wobei die Achsenhalterung (9) und der Behälter (2) so aufeinander abgestimmt sind, dass die Achsenhalterung (9) mit einer Öffnung des Behälters (2) oder des Gehäuses (4) fest verbunden werden kann, oder eine feste Verbindung der Achsenhalterung (9) an den inneren Seitenwänden des Behälters (2) möglich ist.

2. Schäumer (1, 100) gemäss vorstehendem Patentanspruch, der so gestaltet ist, dass jeder Antriebs- (51) und nachgeführte Magnet (31) so angeordnet sind, dass ihre Pole annähernd parallel zur Drehachse gerichtet sind.

3. Schäumer (1, 100) gemäss einem der vorstehenden Patentansprüche, mit einem Sockel (7) zur lösbaren Verbindung mit dem Gehäuse (4), bestimmt zum Anschluss an eine elektrische Stromquelle und so gestaltet, dass er mit dem Gehäuse (4) derart zusammenwirkt, dass ein mechanisches Zusammenwirken des Sockels (7) mit dem Gehäuse (4) die elektrische Verbindung der Antriebsmittel (5) gewährleistet.

4. Schäumer (1, 100) gemäss Patentanspruch 3, bei dem der Behälter (2) mit dem Gehäuse (4) fest verbunden ist.

5. Schäumer (1, 100) gemäss einem der vorstehenden Patentansprüche, mit Rückhaltemitteln, die derart gestaltet sind, dass ein ungewolltes Herausziehen des Rührers (3) aus der Achse (60, 160) nicht möglich ist und ein lösbares Rückhalten des Rührers (3) auf der Achse (60, 160) möglich ist.

6. Schäumer (1) gemäss einem der vorstehenden Patentansprüche, bei dem die Achse (60) auf dem Achsenhalter (9) lösbar befestigt ist.

7. Schäumer (1) gemäss einem der vorstehenden Patentansprüche, bei dem der Behälter (2) und der Achsenhalter (9) Elemente besitzen, die zusammenwirken, um die Drehung des Halters in Drehrichtung zu beenden.

8. Schäumer (1, 100) gemäss einem der vorstehenden Patentansprüche, bei dem der Rührer (3) eine Bohrung besitzt, bestimmt zur Aufnahme eines freien Endes der Achse (60, 160), wobei die Bohrung eine Kontaktfläche (35) besitzt und das Ende der Achse (60, 160) und die Kontaktfläche (35) so gestaltet sind, dass ein punktförmiger oder linearer Kontakt zwischen der Achse (60, 160) und dem Rührer (3) erzeugt wird.
